# EUROPÄISCHE PATENTSCHRIFT

(11) **EP 2 694 878 B1**
(45) Veröffentlichungstag und Bekanntmachung des Hinweises auf die Patenterteilung: **12.12.2018**
(21) Anmeldenummer: 12717070.2
(22) Anmeldetag: 05.04.2012
(51) Int. Cl.: F23C 6/04, F02C 7/141, F02C 7/228

(54) **GASTURBOGRUPPE UND ZUGEHÖRIGES BETRIEBSVERFAHREN**
GAS TURBINE ASSEMBLY AND CORRESPONDING OPERATING METHOD
ENSEMBLE DE TURBINES À GAZ ET PROCÉDÉ PERMETTANT DE FAIRE FONCTIONNER CELUI-CI

(30) Priorität: 08.04.2011 CH 636112011
(43) Veröffentlichungstag der Anmeldung: 12.02.2014
(73) Patentinhaber: Ansaldo Energia Switzerland AG, 5401 Baden (CH)
(72) Erfinder: MARMILIC, Robert, 5415 Rieden (CH); HELLAT, Jaan, 5406 Baden-Rütihof (CH); FREITAG, Ewald, 5400 Baden (CH); EROGLU, Adnan, 5417 Untersiggenthal (CH)
(74) Vertreter: Bernotti, Andrea
(86) Internationale Anmeldenummer: PCT/EP2012/056323
(87) Internationale Veröffentlichungsnummer: WO 2012/136787

(56) Entgegenhaltungen:
- EP-A1- 0 314 112
- EP-A1- 0 620 362
- EP-A2- 2 206 959
- WO-A1-03/038253
- DE-A1- 10 312 971

## Beschreibung

### Technisches Gebiet

Die vorliegende Erfindung betrifft eine Gasturbogruppe gemäss Oberbegriff des Anspruchs 1. Sie betrifft auch ein Verfahren gemäss Oberbegriff des Anspruchs 11.

### Stand der Technik

Aus der EP 0 620 362 B1 ist eine Gasturbogruppe der eingangs genannten Art bekannt. Diese umfasst mindestens einen Verdichter, eine stromab des Verdichters angeordnete erste Brennkammer, eine stromab der ersten Brennkammer angeordnete erste Turbine, eine stromab der ersten Turbine angeordnete zweite Brennkammer sowie eine stromab der zweiten Brennkammer angeordnete zweite Turbine. Mit der bekannten Gasturbogruppe kann somit ein Gasturbinenprozess realisiert werden, der mit einer sequenziellen Verbrennung über zwei Brennkammern und mit zwei Turbinen arbeitet. Mit Hilfe der sequenziellen Verbrennung können die Emissionswerte extrem verbessert werden.

Aus DE 103 12 971 A1 ist eine weitere Gasturbogruppe bekannt geworden, welche auf dem allgemeinen Gedanken ruht, in einer Gasturbogruppe eine zweistufige Verbrennung ohne Zwischenschaltung einer Turbine, d.h. einer Hochdruckturbine, durchzuführen. Bei dieser Gasturbogruppe wird hierbei die Erkenntnis ausgenutzt, dass bei einer magerbetriebenen Brennkammer in den Verbrennungsabgasen regelmässig so viel Oxidator verbleibt, dass für eine nachfolgende zusätzliche Verbrennungsstufe an sich nur noch ein Brennstoff zugeführt werden muss, wobei dann noch immer ein mageres Brennstoff-Oxidator-Gemisch vorliegt. Bei fehlender Turbine zwischen den beiden Verbrennungsstufen bzw. Brennkammern, wie dies noch bei EP 0 620 362 B1 der Fall ist, ergeben sich jedoch stromab der ersten Brennkammer relativ hohe Abgastemperaturen, die bei einer Zumischung von Brennstoff zu einer sofortigen Zündung, also bei unzureichender Durchmischung zu einer nicht strukturierten Verbrennungsreaktion führen würde, bei der nachteilige hohe Emissionswerte entstehen.

Um dieses Problem zu vermeiden, wird bei der genannten Druckschrift DE 103 12 971 A1 vorgeschlagen, die heissen Verbrennungsabgase der ersten Brennkammer zu kühlen, bevor der weitere Brennstoff in die Verbrennungsabgase eingeleitet wird, um so das Brennstoff-Oxidator-Gemisch für die zweite Brennkammer zu bilden. Durch die Abkühlung der Verbrennungsabgase der ersten Brennkammer bzw. der ersten Verbrennungsstufe kann die Abgastemperatur soweit abgesenkt werden, dass die Zündung des eingeleiteten Brennstoffs soweit verzögert wird, dass eine hinreichende Gemischbildung stattfinden kann, um das gewünschte magere Brennstoff-Oxidator-Gemisch zwischen den Verbrennungsabgasen der ersten Brennkammer und dem zusätzlich zugeführten Brennstoff auszubilden.

Von besonderer Bedeutung ist dabei, dass der für die zweite Verbrennungsstufe wirkende Brennstoff direkt, also ohne Bildung eines Vorgemisches, in die gekühlten Abgase der ersten Verbrennungsstufe eingeleitet werden kann. Insoweit kann für die Brennstoffzuführung in der zweiten Verbrennungsstufe, insbesondere auf die bewährte Technologie, wie dies aus EP 0 620 362 B1 hervorgeht, zurückgegriffen werden.

Mit der aus DE 103 12 971 A1 hervorgehenden zweistufigen Mager/Mager-Verbrennung, ohne zwischengeschaltete Turbine, ist es im Nennbetriebspunkt der Gasturbogruppe möglich, besonders günstige Emissionswerte zu erzielen. Darüber hinaus ergeben sich erhebliche Vorteile für transiente Betriebszustände. Beispielsweise kann im Teillastbetrieb die zweite Brennkammer deaktiviert werden, während die erste Brennkammer nach wie vor in ihrem Nennbetriebszustand arbeitet. Hierdurch kann die erste Verbrennungsstufe hinsichtlich Emissionswerte und Wirkungsgrad optimal arbeiten, wodurch in diesen transienten Betriebszuständen die Gasturbogruppe insgesamt günstige Werte für Emission und Wirkungsgrad besitzt. Des Weiteren ist es möglich, die zweite Verbrennungsstufe, insbesondere beim Hochfahren der Gasturbogruppe oder für Spitzenlasten, als "Booster" zu verwenden, indem der zweiten Verbrennungsstufe entsprechend erhöhte Brennstoffmengen zugeführt werden.
Dabei können die Verbrennungsgase der ersten Brennkammer mittels Wärmeübertragung gekühlt werden. Den Verbrennungsgasen wird somit Wärme entzogen und auf ein anderes Medium übertragen, so dass es möglich ist, die aus dem Gasturbinenprozess entnommene Wärme an anderer Stelle zu verwenden. Beispielsweise kann die entnommene Wärme zur Dampferzeugung für eine Dampfturbine genutzt werden.
Alternativ kann die Kühlung der Verbrennungsgase der ersten Brennkammer auch dadurch erreicht werden, dass ein geeignetes Kühlmedium in die Verbrennungsgase eingeleitet wird. Bei dieser Vorgehensweise erfolgt die Temperaturabnahme der Verbrennungsgase aufgrund der Durchmischung mit dem kühleren Kühlmedium. Bei einer solchen Kühlung wird jedoch der Massenstrom durch die Kühlung erhöht, was gleichzeitig eine Leistungssteigerung der Gasturbogruppe nach sich ziehen kann. Dementsprechend kann auch die Kühlung durch ein kontrolliertes Einleiten oder Eindüsen des Kühlmediums als "Booster" genutzt werden, um, insbesondere kurzfristig, die Leistung der Gasturbogruppe zu regeln. Dennoch besteht weiterhin der Wunsch, bei einer Gasturbogruppe der eingangs genannten Art die Emissionswerte und Brennkammer-Design weiter zu verbessern. Bei Brennkammer-Design geht es insbesondere darum, die relativ grosse axiale Länge der beiden sequentiell angeordneten Brennkammern, welche mithin den Lagerabstand indizieren, positiv zu beeinflussen. Insbesondere sollen jene verbrennungstechnischen Engpässe und Interferenzen bei durchgehenden ringförmigen Brennkammern umgangen werden, welche sich bei Gasturbogruppen mit hohen Leistungen einstellen. Zusammenfassend lässt sich sagen, dass beim Design von solchen sequentiellen Verbrennungssystemen auch im Vordergrunde steht, eine verbesserte Kompaktheit der ganzen Gasturbogruppe anzustreben.

Ergänzend wird auf die folgenden Druckschriften verwiesen:
- EP 0 321 809 A und B
- EP 0 704 657 A und B
- EP 0 646 705 A und B
- EP 0 646 704 A und B
- EP 0 718 470 A und B

### Darstellung der Erfindung

Hier setzt nun die Erfindung an. Der Erfindung, wie sie in den Ansprüchen gekennzeichnet ist, liegt die Aufgabe zugrunde, bei einer Gasturbogruppe der eingangs genannten Art bzw. für ein zugehöriges Betriebsverfahren zum Betreiben einer solchen Gasturbogruppe ein kompakteres Design der Gasturbogruppe vorzuschlagen, das insbesondere beim Betrieb solcher Gasturbogruppen höherer Leistungen eine Verbesserung des Verbrennungspotentials gewährleistet, und daraus folgend die Emissionswerte minimiert werden können.

Zu diesem Zweck besteht die erfindungsgemässe Gasturbogruppe im Wesentlichen aus einem Verdichter, einer mit zwei sequentiell angeordneten Brennern oder Brennergruppen ausgebildeten Brennkammer, welche eine sequentielle Verbrennung ermöglichen, und einer der Brennkammer nachgeschalteten Turbine.

Der erste und zweite Brenner, resp. die erste und zweite Brennergruppe, sind in Strömungsrichtung ihres Verbrennungspfades jeweils Bestandteil eines zwischen Verdichter und Turbine sich erstreckenden, auf Kompaktheit ausgelegten und in sich abgeschlossenen rohrförmigen oder einen formwechselnden Querschnitt aufweisenden Kanals, der die Funktion eines Brennkammerelementes erfüllt. Es sind mehrere Brennkammerelemente vorgesehen, welche ringförmig um den Rotor der Gasturbogruppe angeordnet sind.

Diese Kanäle weisen einen verschiedenartigen Durchflussquerschnitt, beispielsweise rund, oval, ellipsenförmig, vieleckig, etc., auf, wobei die jeweilige Querschnittsform nicht durchgehend einheitlich gestaltet sein kann, d.h., von einer bestimmten Querschnittsform im Bereich des ersten Brenners resp. der ersten Brennergruppe kann die Querschnittsform im Bereich des zweiten Brenners resp. der zweiten Brennergruppe eine divergente Ausbildung aufweisen.

In Strömungsrichtung des Verbrennungspfades können die einzelnen Kanäle intermediäre Abschnitte aufweisen, welche eine gemeinsame ringförmige Zone bilden. Solche intermediäre ringförmige Abschnitte können sowohl den Verbrennungsbereich des ersten und/oder zweiten Brenners als auch den Strömungspfad zwischen den genannten Brennern betreffen.

Zusammenfassend lassen sich hinsichtlich der Brennkammerelemente folgende Konfigurationen aufweisen, wobei die hier dargestellten Ausführungen keine in sich abgeschlossene Aufzählung darstellen, wobei die oben genannte Rohrförmigkeit nicht notwendigerweise Weise im Sinne eines zusammenhängenden monotonen Verlaufs des Rohrschlusses zwischen Verdichter und Turbine zu verstehen ist. Auf die unterschiedlichen Querschnitte dieser Brennerelemente wurde weiter oben bereits eingegangen.

Erfindungsgemäss weist die Gasturbogruppe zwischen dem ersten und dem zweiten Brenner, resp. der ersten und zweiten Brennergruppen, einen Übergangskanal auf, der die reine Fortsetzung des stromauf geführten Kanals oder einen intermediären ringförmigen Übergangskanal bildet, in welchen dann die einzelnen Kanäle eingeleitet werden.

Insbesondere die letztgenannte Ausbildung des Übergangskanals macht es vorteilhaft möglich, dass, wie dies gemäß der Erfindung vorgesehen ist, in diesen ein Teil der Verdichterluft und/oder eine Dampfmenge und/oder ein anderes Gas eingebracht werden kann. Des Weiteren kann ein solcher zusammenhängender ringförmiger Übergangskanal vorteilhaft als Mischer ausgebildet werden. Erfindungsgemäß ist der Übergangskanal zudem als Wärmetauscher ausgebildet.

Dabei können die genannten Brenner oder Brenngruppen als Vormischbrenner ausgebildet werden, wobei eine solche Auslegung nicht zwingend zu verstehen ist, beispielsweise können ohne Weiteres Diffusionsbrenner oder Hybridbrenner vorgesehen werden. Es ist auch ohne weiteres möglich, bei Brennergruppen verschiedenartige Brenner miteinander zu kombinieren.

Werden Vormischbrenner vorgesehen, so sollen diese vorzugsweise nach den Gegenständen und Verbrennungsverfahren gemäss den Druckschriften EP 0 321 809 A1 und/oder EP 0 704 657 A1 ausgebildet sein.

Insbesondere die genannten Vormischbrenner lassen sich mit flüssigen und/oder gasförmigen Brennstoffen aller Arten betreiben. So ist es ohne Weiteres möglich, unterschiedliche Brennstoffe innerhalb der einzelnen Brennergruppen oder Brennern vorzusehen. Das heisst, dass ein Vormischbrenner auch gleichzeitig mit unterschiedlichen Brennstoffen betrieben werden kann.

Was den zweiten Brenner betrifft, ist dieser vorzugsweise nach EP 0 620 362 A1 oder DE 103 12 971 A1 aufgebaut.

Indessen ist eine solche Struktur nicht zwingend, denn es lässt sich auch mit guten Gründen vorsehen, dass die Verbrennungsflamme im Brennerkanal wirkt.

Im Sinne der obigen Ausführungen, wonach ringförmige intermediäre Abschnitte innerhalb des Strömungspfades erfolgen können, so soll nach Bedarf abströmungsseitig des zweiten Brenners oder der zweiten Brennergruppe ein Überleitungskanal zu der Turbine führen, in welchen die einzelnen Kanäle konvergieren, womit eine strömungsintegrale Beaufschlagung der Turbine sicher gestellt ist.

Bei dieser Gasturbogruppe ist als eine Ausführungsvariante vorgesehen, dass die rotierenden Teile von Verdichter und Turbine auf einem gemeinsamen Rotor angeordnet sind. Eine mehrwellige Gasturbogruppe, wie sie aus dem Stand der Technik bereits bekannt geworden ist, lässt sich hinsichtlich des Erfindungsgegenstandes auch zugrunde legen. Schliesslich lässt sich eine solche Gasturbogruppe auch als Bestandteil eines Gas/Dampf-Kombianlage vorsehen, d.h. die Abgase aus der Gasturbogruppe dienen dann der Produktion von Dampf zum Betreiben einer Dampfturbine, welche ihrerseits mit einem weiteren Generator angekoppelt ist. Umgekehrt kann dann der Dampfkreislauf auch jene Dampfmenge liefern, welche zur Kühlung der kalorisch belasteten Komponente der Gasturbogruppe dienen.

Erfindungsgemäss geht es hier auch um ein Verfahren zum Betrieb einer solchen Gasturbogruppe, welche im Wesentlichen denselben Aufbau wie oben beschrieben aufweist, also dahingehend, dass der erste und zweite Brenner, resp. die erste und zweite Brennergruppe in Strömungsrichtung ihres Verbrennungsgaspfades innerhalb eines zwischen Verdichter und Turbine sich erstreckenden rohrförmigen als Kanal ausgebildeten Brennkammerelementes sequentiell betrieben werden. Das kalorische Potential der Abgase aus einer solchen Brennkammer lässt sich zum Betrieb eines Dampfkreislaufs rekuperieren.

Wesentlich bei dieser Gasturbogruppe ist indessen deren Aufbau, der aus einer Anzahl röhrförmiger Brennkammerelemente besteht, welche sich um den Rotor anordnen und während des Betriebs untereinander entweder eine autonome oder quasi-autonome sequentielle Verbrennung aufrechterhalten. Diese sequentielle Verbrennung hinsichtlich des ersten und zweiten Brenners resp. der ersten und zweiten Brennergruppe ist auch möglich, wenn der Strömungspfad der einzelnen Kanäle nicht eine durchgehende Autonomie zwischen Verdichter und Turbine aufweist, sondern intermediäre Abschnitte vorhanden sind, welche eine ringförmige einheitliche Ausbildung aufweisen, wie dies beispielsweise für den Überleitungskanal zu der Turbine der Fall ist.

Zunächst wird auf die Verbrennungsgase in einem intermediären Übergangskanal, in sich abgeschlossen oder ringförmig ausgebildet, stromab des ersten Brenners und stromauf des zweiten Brenners weiter eingewirkt. Erfindungsgemäß werden diese Verbrennungsgase aus dem ersten Brenner mittels eines Wärmetauschers gekühlt. Dies deswegen, weil die Verbrennung im ersten Brenner bei einer relativ hohen Abgastemperatur betrieben werden kann, so dass eine Zumischung eines Brennstoffs zu einer sofortigen Reaktion führen würde, also bei unzureichender Durchmischung dann die Gefahr besteht, dass es zu einer spontanen und deshalb unkontrollierten Verbrennungsablauf kommt, bei welchem mit hohen Emissionswerten gerechnet werden müsste. Als Kühlmittel zum Betrieb eines solchen Wärmetauschers wird ein inertes Fluid, insbesondere Wasser, Wasserdampf Frischluft, Bypassluft, Kühlluft, verwendet.

Die beiden sequentiell angeordnete Brenner oder Brennergruppen jedes rohrförmigen Brennkammerelements werden individuell mit einem Brennstoff betrieben, wobei der Brennstoff für die zweite Brennkammer über eine dort operierende Brennstoffdüse direkt eingebracht wird. Liegen hier die Gastemperaturen zwischen 900°-1'100°C, findet eine Selbstzündung des eingedüsten Brennstoffs statt.

Um eine optimale Abstimmung der im rohrförmigen Brennkammerelement vorherrschenden Temperaturen zu gewährleisten, lassen sich für den ersten und/oder zweiten Brenner, resp. für die erste und zweite Brennergruppe, Mager-Gemische eingesetzten, welche zu einer regulierten Verbrennung führen, womit die Gefahr einer NOx-Bildung umgangen wird. Auch lässt sich vorsehen, im intermediären Übergangskanal zwischen dem ersten und zweiten Brenner einen weiteren Brennstoff einzudüsen, was zu einer proaktive Vorvermischung stromauf des zweiten Brenners führt. Ein solcher Brennstoff kann ein Mager-Gemisch sein, wobei die Einleitung oder Zumischung eines hochreaktiven Gases auch möglich ist.

Gemäss einer Ausgestaltung ist der Übergangskanal als Diffusor ausgebildet ist.

Vorteilhafte aufgabengemässe Ausführungsformen der Erfindung sind Gegenstand der abhängigen Ansprüche.

### Kurze Beschreibung der Zeichnung

Bevorzugte Ausführungsbeispiele der Erfindung sind in den nachfolgenden Figur(en) näher dargestellt und beschrieben. Alle für das unmittelbare Verständnis der Erfindung nicht wesentlichen Elemente sind fortgelassen worden. Gleiche Elemente sind in den verschiedenen Figuren mit den gleichen Bezugszeichen versehen. Es zeigen:
- Fig. 1: einen stark vereinfachten Längsschnitt durch eine erfindungsgemässe Gasturbogruppe, bei welcher der Übergangskanal eine Eindüsung aufweist,
- Fig. 2: einen Schnitt durch die Gasturbogruppe,
- Fig. 3: eine weitere Konfiguration eines zusammenhängenden Brennerelementes

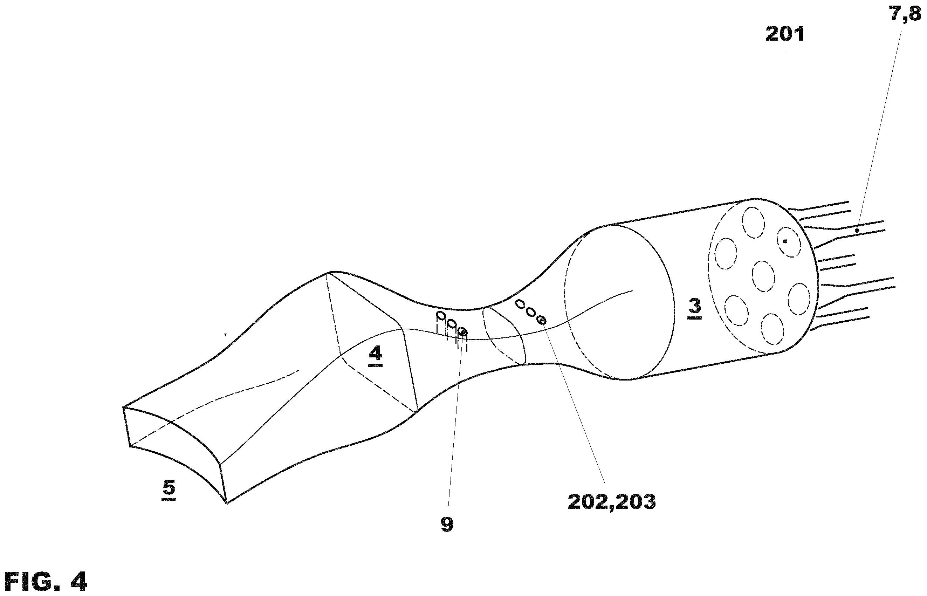

- Fig. 4: eine weitere Konfiguration eines zusammenhängenden Brennerelementes.

### Wege zur Ausführung der Erfindung

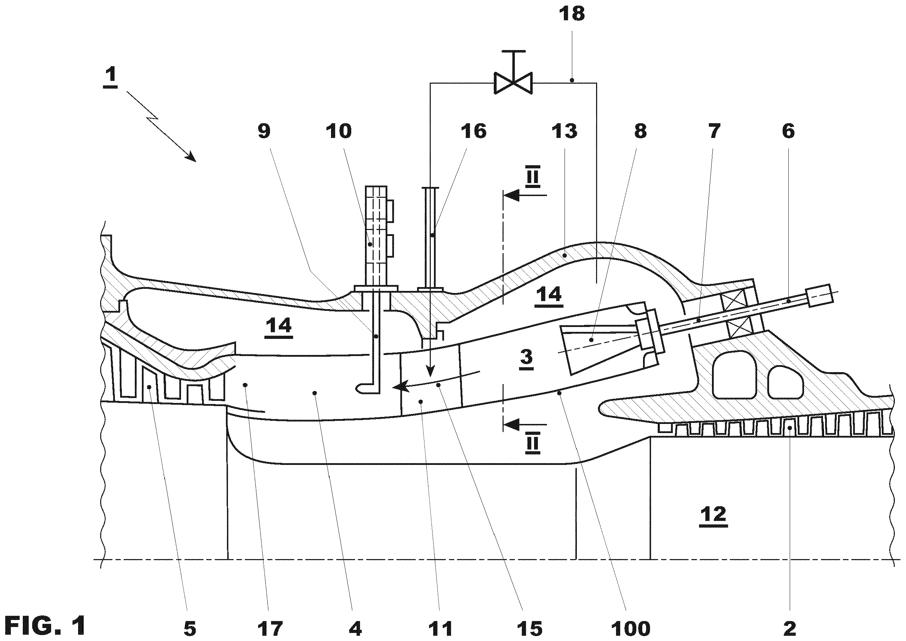

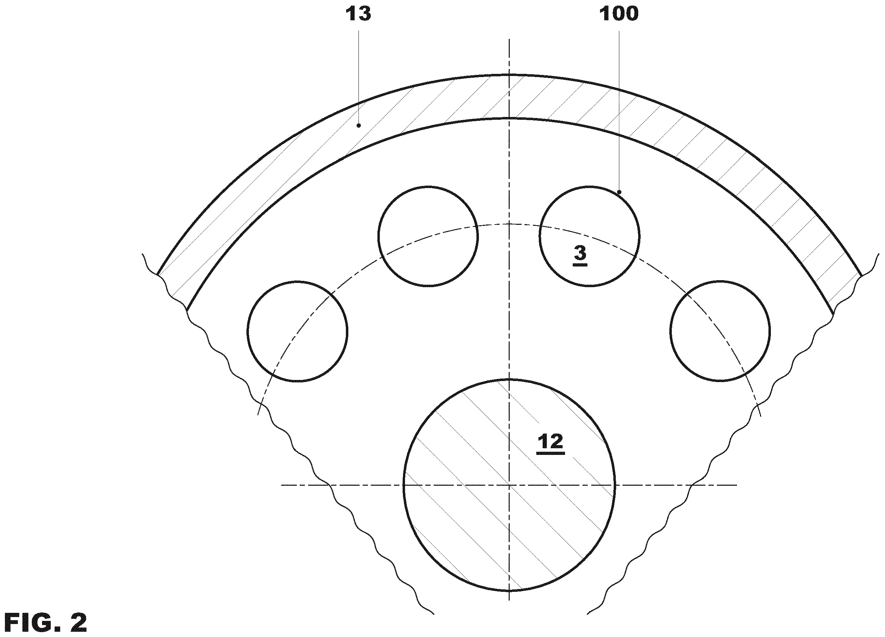

Fig. 1 zeigt eine Gasturbogruppe 1, welche aus einem Verdichter 2, einem ersten Brenner 8, einem zweiten Brenner 9 und mindestens eine Turbine 5, welche abströmungsseitig der zum zweiten Brenner 9 gehörenden Reaktionszone 4 wirkt. Der erste Brenner 8 ist stromab des Verdichters 2 angeordnet und wird mit der dort komprimierten Luft beaufschlagt. Der zweite Brenner 9 ist stromab der zum ersten Brenner 8 gehörenden Reaktionszone 3 angeordnet. Der erste Brenner 8 weist eine erste Brennstoffzuführungseinrichtung 6 auf, welche über eine Brennstofflanze 7 dem genannten ersten Brenner 8 einen gasförmigen und/oder flüssigen Brennstoff zuführt. Der zweite Brenner 9 verfügt über eine autonome zweite Brennstoffzuführungseinrichtung 10, welche ebenfalls die Zuführung eines gasförmigen und/oder flüssigen Brennstoffs sicherstellt. Unmittelbar abströmungsseitig des ersten Brenners 8 wirkt die zugehörige Reaktionszone 3, und stromab dieser ist ein Übergangskanal 11 angeordnet, der je nach Ausgestaltung für verschiedene Zwecke ausgelegt sein kann. Hierüber wird weiter unten näher eingegangen. Der erste Brenner 8 und der zweite Brenner 9, die dazugehörigen Reaktionszonen 3, 4 und der dazwischen geschaltete Übergangskanal 11, bilden ein in sich abgeschlossenes Brennkammerelement 100, welches autonom betrieben wird, wie die individuellen Brennstoffzuführungen 6 und 10 zeigen. Demnach erfolgt hier die sequentielle Verbrennung nicht über gemeinsame einheitliche Ringbrennkammern, wie dies beispielsweise noch in WO 03/038253 beschrieben wird, sondern über eine Anzahl Brennkammerelemente 100, welche einzeln um den Rotor 12 der Gasturbogruppe 1 angeordnet sind (Siehe hierzu Fig. 2).

Die Anzahl der solcherart angeordneten Brennkammerelemente 100 hängt von der Grösse der Gasturbogruppe 1 und von der zu erbringenden Leistung ab. Die Brennkammerelemente 100 sind in einem Gehäuse 13 der Gasturbogruppe 1 untergebracht, wobei sie von einer Lufthülle 14 umgeben sind, über welche die verdichtete Luft zum ersten Brenner 8 strömt.

Der Übergangskanal 11 enthält einen Verbrennungsgaspfad 15, der hier durch einen Pfeil symbolisiert und der beim Betrieb der Gasturbogruppe 1 von den Verbrennungsgasen des ersten Brenners 8 durchströmt ist.

Dieser mit dem Übergangskanal 11 in Wirkverbindung stehende Verbrennungspfad 15 lässt sich seiner Funktion nach individuell ausgestalten.

In der Figur 1 steht der Übergangskanal 11 in Wirkverbindung mit einer Eindüsungseinrichtung 16, welche über eine geregelte Leitung 18 mit der verdichteten Luft 14 in Verbindung steht, und über welche Kühlluft in den durch einen Pfeil symbolisierten Verbrennungsgaspfad 15 eingeleitet bzw. eingedüst werden kann. Die Eindüsungseinrichtung 16 kann auch mit einem extern gespiesenen Kühlmedium betrieben werden. Beim einem extern zugeführten Kühlmedium kann es sich zweckmässigerweise um ein für die Verbrennungsreaktion inertes Fluid handeln, wie z.B. Wasser oder Wasserdampf. Ebenso ist es möglich, Frischluft, Bypassluft oder Kühlluft als externes Kühlmedium zu verwenden.

Erfindungsgemäß ist der Übergangskanal 11 als Wärmetauscher ausgebildet. Ein solcher Wärmetauscher weist ebenfalls den bereits beschriebenen Verbrennungsgaspfad 15 auf, der wiederum von den Verbrennungsgasen des ersten Brenners 8 durchströmt ist. Mit diesem so ausgestalteten Verbrennungsgaspfad 15 wird ein Kühlmediumpfad geschaffen, der eine Wärmemenge aus den hochkalorischen Verbrennungsgasen des ersten Brenners 8 entzieht. Demnach lässt sich bei einer solchen Ausgestaltung des Übergangskanals 11 sagen, dass die Brennkammerelemente 100 unmittelbar mit einer Wärmeübertragung gekoppelt sind. Im Betrieb der Gasturbogruppe 1 ist der Kühlmediumpfad zur Speisung des als Wärmetauscher ausgebildeten Übergangskanals 11 von einem Kühlmedium durchströmt, z.B. Wasser oder Wasserdampf. In einem solchen Wärmetauscher wird Wärme den Verbrennungsgasen entzogen und auf das dort eingesetzte Kühlmedium übertragen, wodurch die Verbrennungsgase aus dem Betrieb des ersten Brenners 8 gekühlt werden und das Kühlmedium gleichsam erwärmt wird. Das erwärmte Kühlmedium kann dann stromab des Wärmetauschers für andere Prozesse genutzt werden. Beispielsweise kann das Kühlmedium, sofern es sich um Wasserdampf handelt, einer Dampfturbine zugeführt werden.

Der Übergangskanal 11 kann auch für eine andere Betriebsweise ausgelegt sein, indem die Eindüseinrichtung 16 als interne Eindüseinrichtung ausgestaltet wird, die das jeweilige Kühlmedium intern, also von innen dem Verbrennungsgaspfad 15 zuführt. Beim intern zugeführten Kühlmedium handelt es sich zweckmässigerweise um Kühlluft, die einem Kühlluftsystem der Gasturbogruppe 1 an geeigneten Stellen entnommen werden kann. Beispielsweise lässt sich dies leicht bewerkstelligen, nachdem die Brennkammerelemente 100 im Gehäuse 13 von einer Lufthülle 14 aus verdichteter Luft umgeben sind.

Soll die Länge des einheitlichen Rotors 12 minimiert werden, so lässt sich eine Konfiguration vorsehen, bei welcher die Brennkammerelemente 100 nicht mehr weitgehend horizontal verlaufen, sondern etwa ab der Mitte in vertikaler Richtung abgewinkelt sind, dergestalt, dass die einzelnen Brennstofflanzen 7 dann das Gehäuse oberseitig im Wesentlichen schräg bis vertikal oder quasi-vertikal durchstossen. Damit lässt sich mit einer solchen Vorkehrung die Länge des Rotors 13 wesentlich reduzieren.

Die erfindungsgemässe Gasturbogruppe 1, unabhängig der Linienführung der Brennerelemente 100, wird zweckmässigerweise wie folgt betrieben:
Der Verdichter 2 erzeugt verdichtete Luft, die dem ersten Brenner 8 zugeführt wird. Ein Teilstrom der verdichteten Luft kann dabei als Kühlgas bzw. Kühlluft dienen und zur Kühlung unterschiedlicher Komponenten der Gasturbogruppe 1 genutzt werden. Die erste Brennstoffzuführungseinrichtung 6 düst den Brennstoff direkt in den einzelnen mit verdichteter Luft beaufschlagten als Vormischbrenner 8 ausgebildeten Brenner eines jeden Brennkammerelements 100 ein. Die Brennstoffeindüsung und der jeweilige Vormischbrenner 8 sind dabei so aufeinander abgestimmt, dass sich ein mageres Brennstoff-Oxidator-Gemisch einstellt, das innerhalb der ersten Reaktionszone 3 mit günstigen Werten für Schadstoffemission und Wirkungsgrad verbrennt. Die dabei entstehenden Verbrennungsgase werden über den bereits beschriebenen Übergangskanal 11 dem zweiten Brenner 9 zugeführt.

Da dieser Übergangskanal 11 als Wärmetauscher ausgebildet ist, werden die Verbrennungsgase aus der ersten Reaktionszone 3 soweit abgekühlt, dass die über die zweite Brennstoffzuführungseinrichtung 10 stattfindende Brennstoffeindüsung in die Verbrennungsgase nicht zu einer unerwünschten frühen Selbstentzündung ausserhalb der zweiten Reaktionszone 4 führt. Beispielsweise werden die Verbrennungsgase mit Hilfe eines solchen Wärmetauschers auf etwa 1'100°C oder darunter abgekühlt.

Im Brenner 9 wird dann den so abgekühlten Verbrennungsgasen mit Hilfe der zweiten Brennstoffzuführungseinrichtung 10 erneut Brennstoff zugeführt, wobei auch hier die Brenner und die Brennstoffzuführung so konfiguriert sind, dass sich daraus ein mageres Brennstoff-Oxidator-Gemisch bildet, das in der zweiten Reaktionszone 4 mit günstigen Werten hinsichtlich der Schadstoffemission und des Wirkungsgrades verbrennt.

Die in der zweiten Reaktionszone 4 gebildeten Verbrennungsgase beaufschlagen dann die nachgeschaltete Turbine 5. In diesem Zusammenhang lässt sich vorsehen, dass sämtliche autonom betriebene Brennkammerelemente 100 einen gemeinsamen ringförmigen Überleitungskanal 17 bilden, damit die unmittelbar stromab wirkende Turbine 5 gleichförmig beaufschlagt werden kann.

Die Kühlung der Verbrennungsabgase innerhalb der ersten Reaktionszone 3, bevor die zweite Brennstoffzuführungseinrichtung 9 den Brennstoff eindüst, führt dazu, dass vor der Selbstzündung des mit der zweiten Brennstoffzuführungseinrichtung 10 eingedüsten Brennstoffs eine hinreichende Gemischbildung im Bereich des Brenners 9 entstehen kann. Durch diese Massnahme ist gewährleistet, dass die gewünschte magere Verbrennung stattfinden kann.

Durch die Abkühlung der Verbrennungsabgase der ersten Reaktionszone 3 ist es somit möglich, mit Hilfe der zweiten Brennstoffzuführungseinrichtung 10 den Brennstoff direkt in die nunmehr abgekühlten Verbrennungsgase einzudüsen. Dies ist von besonderem Vorteil, da somit auf konventionelle und in der Praxis bewährte Technologien für die direkte Brennstoffeindüsung zurückgegriffen werden kann.

Wesentliche Vorteile der so bewerkstelligten Mager-Mager-Verbrennung sind zum einen verbesserte Werte hinsichtlich der Schadstoffemission und des Wirkungsgrads der Gasturbogruppe 1. Zum anderen ergeben sich Vorteile beim Betrieb der Gasturbogruppe 1 ausserhalb ihres Nennbetriebszustands. Beispielsweise kann die Gasturbogruppe 1, d.h. die einzelnen Brennkammerelemente 100, auch mit nur einem Brenner 8, 9, zweckmässigerweise mit dem ersten Brenner 8, betrieben werden, um beispielsweise einen Teillastbetrieb zu ermöglichen. In einem solchen Teillastbetrieb der Gasturbogruppe 1 kann der erste Brenner 8 in seinem Nennbetriebspunkt betrieben werden, wodurch auch im Teillastfall günstige Werte für Schadstoffemission und Wirkungsgrad erzielbar sind. Darüber hinaus ergeben sich Möglichkeiten, die Leistungsabgabe der Gasturbogruppe 1 beim Anfahren und/oder bei Spitzenlastzeiten kurzfristig zu erhöhen, indem beispielsweise dem zweiten Brenner 9 eine erhöhte Brennstoffmenge zugeführt wird.

Insbesondere durch den Umstand, dass die hier zugrunde gelegte Gasturbogruppe mit einer Anzahl autonom betriebener Brennkammerelemente 100 gefahren wird, lässt sich für einen Teillastbetrieb auch vorsehen, dass nicht zwingend eine Reduktion des Betriebes auf den ersten Brenner 8 erfolgt, sondern indem die Zahl der vollwertig im Betrieb stehenden Brennkammerelemente 100 reduziert werden kann. Sonach lässt sich die Flexibilität, die Ausbeute an Wirkungsgrad und Minimierung der Schadstoffemissionen bei der erfindungsgemässen Gasturbogruppe 1 in jedem Betriebszustand maximieren.

Beachtenswert ist ausserdem, dass bei der sequentiellen Verbrennung grundsätzlich kein zusätzliches Frischgas (Luftmenge) zugeführt werden muss, um sowohl für den ersten Brenner 8 als auch für den zweiten Brenner 9 ein mageres Brennstoff-Oxidator-Gemisch bereitzustellen. Zu diesem Zweck wird das Brennstoff-Luft-Verhältnis für das dem ersten Brenner 8 zugeführte Brennstoff-Oxidator-Gemisch so mager gewählt, dass den entstehenden mageren Verbrennungsgasen des ersten Brenners 8 noch eine für die Verbrennungsreaktion in der zweiten Reaktionstone 4 erforderliche Brennstoffmenge zugeführt werden kann und das so für die zweite Reaktionszone 4 gebildete Brennstoff-Oxidator-Gemisch noch hinreichend mager ist, um die erwünschte schadstoffarme und effiziente Verbrennung zu realisieren.

Während bei der Kühlung der Verbrennungsgase mit Hilfe des oben beschriebenen Wärmetauschers der Massenstrom von der ersten Reaktionszone 3 zur zweiten Reaktionszone 4 im wesentlichen konstant bleibt, kann mit Hilfe der Eindüseinrichtung 16 entsprechend der Figur 1 der der zweiten Reaktionszone 4 zur Verfügung stehenden Massenstrom erhöht werden.

Damit kann gleichzeitig eine Leistungssteigerung der nachfolgenden Turbine 5 erzielt werden. Die mit der Eindüseinrichtung 16 arbeitenden Kühleinrichtungen im Übergangskanal 11 sind insbesondere dann von Interesse, wenn die Eindüsung des Kühlmediums zur kurzfristigen Leistungssteigerung der Gasturbogruppe 1 genutzt werden soll, um beispielsweise Spitzenlastzeiten zu überbrücken und/oder das Anfahren der Gasturbogruppe 1 zu beschleunigen.

Wie bereits oben unter "Darstellung der Erfindung" detailliert dargelegt, ist die dargelegte sequentielle Verbrennung hinsichtlich des ersten und zweiten Brenners 8, 9 auch möglich, wenn der Strömungspfad der einzelnen Brennerelemente 100 nicht eine durchgehende Autonomie zwischen Verdichter 2 und Turbine 5 aufweisen, sondern intermediäre Abschnitte aufweisen, welche eine ringförmige einheitliche Ausbildung aufweisen, wie dies beispielsweise für den Überleitungskanal zu der Turbine der Fall ist. Ein solcher Abschnitt kann ohne Weiteres den Übergangskanal 11 betreffen.

Fig. 2 bildet den Schnitt II-II aus Fig. 1. Darin ist eine Konfiguration der ringförmig um den Rotor 12 angeordneten Brennerelemente 100 ersichtlich.

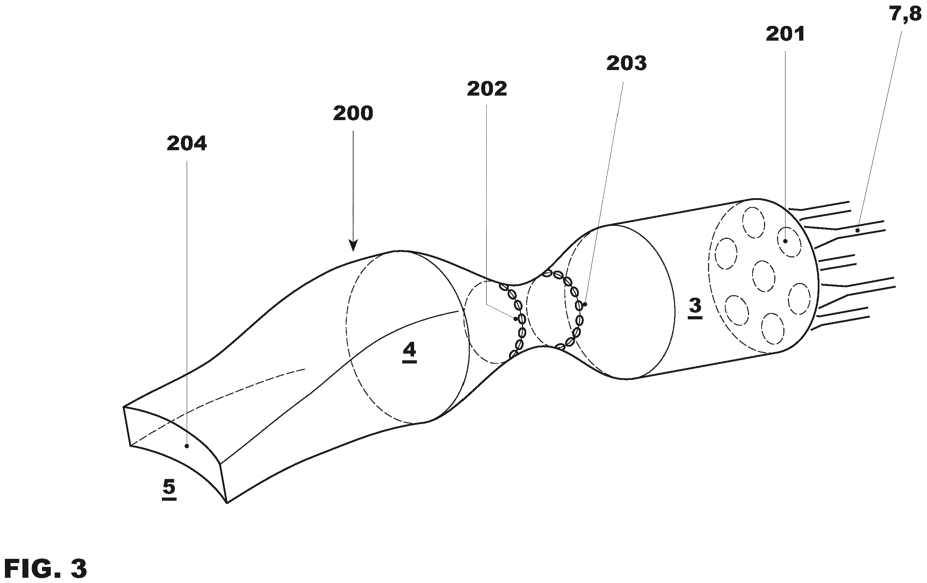

Fig. 3 zeigt ein Brennerelement 200 mit einem multivariablen Querschnittsverlauf in Strömungsrichtung. Kopfseitig ist der erste Abschnitt des Brennerelements 200 nicht mehr durch einen einzigen Brenner ausgestattet, sondern durch eine Brennergruppe 201, welche ihrerseits durch einheitliche oder verschiedenartige Brenner aufgebaut sein kann. Auch hier können Vormischbrenner, Diffusionsbrenner, Hybridbrenner, etc., zum Einsatz kommen, wobei auch eine Kombination der genannten Brenner eingesetzt werden kann. Stromab dieser ersten Brennergruppe folgt eine erste Reaktionszone 3, welche in etwa derjenigen aus Fig. 1 entspricht. Abströmungsseitig dieser Reaktionszone 3 geht der ursprüngliche Querschnitt in eine Einschnürung über. Durch diese Einschnürung wird ein neuer stark verengter Querschnitt 203 gebildet, in welchem ein SEV-Brenner 202 im Einsatz steht. Dieser SEV-Brenner 202 hat die Funktion eines zweiten Brenners und erfüllt die weitere Aufgabe, die kalorische Aufbereitung der Heissgase zu vervollständigen. Auch hier lassen sich selbstverständlich nicht nur einzelne Brenner vorsehen, sondern es können auch hier ganze Brennergruppen operieren. Anschliessend folgt eine zweite Reaktionszone 4, welche, zumindest anfänglich in etwa den rundlichen Querschnitt der ersten Reaktionszone 3 aufweist. Der anschliessende Verlauf geht aber dann in einen etwa rechteckigen Querschnittsverlauf 204 über, der optimale strömungstechnische Verhältnisse für die anschliessende zu beaufschlagende Turbine 5 bildet.

### Bezugszeichenliste

- 1: Gasturbogruppe
- 2: Verdichter
- 3: Erste Reaktionszone
- 4: Zweite Reaktionszone
- 5: Turbine
- 6: Erste Brennstoffzuführungseinrichtung
- 7: Brennstofflanze
- 8: Erster Brenner
- 9: Zweiter Brenner
- 10: Zweite Brennstoffzuführungseinrichtung
- 11: Übergangskanal
- 12: Rotor
- 13: Gehäuse
- 14: Kühllufthülle
- 15: Verbrennungspfad
- 16: Eindüseinrichtung
- 17: Ringförmiger Überleitungskanal
- 18: Kühlluftabzweigung
- 100, 200, 300: Brennkammerelement

## Patentansprüche

1. Gasturbogruppe, im Wesentlichen bestehend aus mindestens einem Verdichter, mindestens einem ersten Brenner (8, 201), mindestens einem dem ersten Brenner nachgeschalteten zweiten Brenner (9, 202),
mindestens einer dem zweiten Brenner nachgeschalteten Turbine (5), mindestens einem Rotor, wobei mindestens der erste und/oder der zweite Brenner (8, 9) in Strömungsrichtung eines von den Brennern gebildeten Verbrennungspfades Bestandteil mindestens eines zwischen Verdichter (2) und Turbine (5) sich erstreckenden und in sich abgeschlossenen Brennkammerelementes (100, 200, 300) bilden, wobei das Brennkammerelement einen rohrförmigen oder formwechselnden Querschnitt aufweist, und wobei der Verbrennungspfad eine erste Reaktionszone (3) aufweist, welche abströmungsseitig des ersten Brenners (8) angeordnet ist, der Verbrennungspfad eine zweite Reaktionszone (4) aufweist, welche abströmungsseitig des zweiten Brenners (9) angeordnet ist, wobei abströmungsseitig der ersten Reaktionszone (3) und stromauf des zweiten Brenners (9) ein Übergangskanal (11) angeordnet ist und in den Übergangskanal ein Teil der Verdichterluft und/oder eine Dampfmenge und/oder ein anderes Gas einbringbar ist,
**dadurch gekennzeichnet, dass** eine Vielzahl von Brennkammerelementen ringförmig um den Rotor der Gasturbogruppe angeordnet sind, und dass der Übergangskanal als Wärmetauscher ausgebildet ist.

2. Gasturbogruppe nach Anspruch 1, **dadurch gekennzeichnet, dass** mindestens zwei Brennkammerelemente in Strömungsrichtung ihres Verbrennungspfades mindestens eine intermediäre zueinander kommunizierende Durchflusszone aufweisen.

3. Gasturbogruppe nach einem der Ansprüche 1-2, **dadurch gekennzeichnet, dass** die Brennkammerelemente in ihrem Strömungsverlauf mindestens eine gemeinsame ringförmige Durchflusszone aufweisen.

4. Gasturbogruppe nach Anspruch 1, **dadurch gekennzeichnet, dass** der Übergangskanal (11) als Diffusor ausgebildet ist.

5. Gasturbogruppe nach Anspruch 1, **dadurch gekennzeichnet, dass** der erste Brenner (8) ein Vormischbrenner ist.

6. Gasturbogruppe nach einem der Ansprüche 1-5, **dadurch gekennzeichnet, dass** die Brennkammerelemente abströmungsseitig der zweiten Reaktionszone (4) und stromauf der Turbine (5) in einen ringförmigen Überleitungskanal (17) konvergieren.

7. Gasturbogruppe nach Anspruch 6, **dadurch gekennzeichnet, dass** der Überleitungskanal (17) stromauf der Turbine (5) in strömungsmässiger Wirkverbindung mit den dort einmündenden rohrförmigen Brennkammerelementen steht.

8. Gasturbogruppe nach Anspruch 7, **dadurch gekennzeichnet, dass** der Überleitungskanal (17) zu der Turbine (5) einen zusammenhängenden ringförmigen Durchflussquerschnitt aufweist.

9. Gasturbogruppe nach einem oder mehreren der Ansprüche 1-8, **dadurch gekennzeichnet, dass** die rotierenden Teile von Verdichter (2) und Turbine (5) auf einem gemeinsamen Rotor (12) angeordnet sind.

10. Gasturbogruppe nach einem der Ansprüche 1-9, **dadurch gekennzeichnet, dass** die Gasturbogruppe Bestandteil einer Gas/Dampf-Kombianlage ist.

11. Verfahren zum Betrieb einer Gasturbogruppe, welche im Wesentlichen besteht aus mindestens einem Verdichter, mindestens einem ersten Brenner (8, 201), mindestens einem dem ersten Brenner nachgeschalteten zweiten Brenner (9, 202), mindestens einer dem zweiten Brenner nachgeschalteten Turbine (5), wobei mindestens der erste und/ oder der zweite Brenner (8, 9) in Strömungsrichtung eines von den Brennern gebildeten Verbrennungspfades Bestandteil mindestens eines zwischen Verdichter (2) und Turbine (5) sich erstreckenden und in sich abgeschlossenen Brennkammerelementes (100, 200, 300) bilden, wobei das Brennkammerelement einen rohrförmigen oder formwechselnden Querschnitt aufweist, und wobei das Brennkammerelement durch eine sequentielle Verbrennung betrieben wird wobei der Verbrennungspfad eine erste Reaktionszone (3) aufweist, welche abströmungsseitig des ersten Brenners (8) angeordnet ist, der Verbrennungspfad eine zweite Reaktionszone (4) aufweist, welche abströmungsseitig des zweiten Brenners (9) angeordnet ist, wobei in einen abströmungsseitig der ersten Reaktionszone (3) und stromauf des zweiten Brenners (9) angeordneten Übergangskanal (11) ein Teil der Verdichterluft und/oder eine Dampfmenge und/oder ein anderes Gas eingebracht wird,
**dadurch gekennzeichnet, dass** eine Vielzahl von Brennkammerelementen ringförmig um einen Rotor (12) der Gasturbogruppe angeordnet sind, und dass die Verbrennungsgase aus einer ersten Verbrennung in einem als Wärmetauscher ausgebildeten intermediären Übergangskanal (11) stromab einer zum ersten Brenner (8) gehörenden Reaktionszone (3) und stromauf des zweiten Brenners (9) gekühlt werden.

12. Verfahren nach Anspruch 11, **dadurch gekennzeichnet, dass** das kalorische Potential der Abgase aus der Gasturbogruppe zum Betrieb eines Dampfkreislaufs eingesetzt wird.

13. Verfahren nach Anspruch 11 oder 12, **dadurch gekennzeichnet, dass** die Gasturbogruppe mit einer Anzahl röhrförmiger Brennkammerelemente betrieben wird, welche sich um den Rotor anordnen und während des Betriebs untereinander eine autonome, quasi-autonome oder kommunizierende Verbrennung entwickeln.

14. Verfahren nach Anspruch 11, **dadurch gekennzeichnet, dass** die Verbrennungsgase aus einer ersten Verbrennung in einem intermediären Übergangskanal (11) stromab einer zum ersten Brenner (8) gehörenden Reaktionszone (3) und stromauf des zweiten Brenners (9) mittels eines Wärmetauschers gekühlt werden.

15. Verfahren nach einem der Ansprüche 11 oder 14, **dadurch gekennzeichnet, dass** zur Kühlung der Verbrennungsgase ein inertes Fluid, insbesondere Wasser, Wasserdampf Frischluft, Bypassluft, Kühlluft, verwendet wird.

16. Verfahren nach einem der Ansprüche 11-15, **dadurch gekennzeichnet, dass** ein erster Brennstoff dem ersten Brenner (8) zugeführt wird, dass ein zweiter Brennstoff dem zweiten Brenner (9) zugeführt wird, dass der zweite Brennstoff direkt in die Verbrennungsgase aus der ersten Verbrennung eingedüst wird.

17. Verfahren nach einem der Ansprüche 11-16, **dadurch gekennzeichnet, dass** als Brennstoff für den ersten und/oder zweiten Brenner durch ein Mager-Gemisch gebildet wird.

18. Verfahren nach einem der Ansprüche 11-17, **dadurch gekennzeichnet, dass** in den intermediären Übergangskanal (11) ein weiterer Brennstoff eingedüst wird.

19. Verfahren nach Anspruch 18, **dadurch gekennzeichnet, dass** als Brennstoff ein Mager-Gemisch und/oder ein hochreaktives Gas eingesetzt werden.

## Claims

1. Gas turbine assembly which substantially comprises
at least one compressor,
at least one first burner (8, 201),
at least one second burner (9, 202) connected downstream of the first burner,
at least one turbine (5) connected downstream of the second burner,
at least one rotor,
wherein at least the first and/or second burner (8, 9) constitute a component, formed in the flow direction of a combustion path formed by said burners, of at least one combustion chamber element (100, 200, 300) extending between the compressor (2) and the turbine (5) and closed in itself,
wherein the combustion chamber element has a tubular or form-changing cross-section, and
wherein the combustion path has a first reaction zone (3) arranged on the downstream side of the first burner (8), and the combustion path has a second reaction zone arranged on the downstream side of the second burner (9),
wherein a connecting channel (11) is arranged on the downstream side of the first reaction zone (3) and upstream of the second burner (9), and part of the compressor air and/or a steam quantity and/or another gas can be introduced into the connecting channel,
**characterised in that** a plurality of combustion chamber elements is arranged in a ring shape around the rotor of the gas turbine assembly, and that the connecting channel is configured as a heat exchanger.

2. Gas turbine assembly according to claim 1, **characterised in that** at least two combustion chamber elements have at least one intermediate and mutually communicating through-flow zone in the flow direction of their combustion path.

3. Gas turbine assembly according to one of claims 1 to 2, **characterised in that** the combustion chamber elements have at least one common annular through-flow zone in their flow path.

4. Gas turbine assembly according to claim 1, **characterised in that** the connecting channel (11) is formed as a diffuser.

5. Gas turbine assembly according to claim 1, **characterised in that** the first burner (8) is a premix burner.

6. Gas turbine assembly according to any of claims 1 to 5, **characterised in that** the combustion chamber elements converge into an annular transition channel (17) on the downstream side of the second reaction zone (4) and upstream of the turbine (5).

7. Gas turbine assembly according to claim 6, **characterised in that** upstream of the turbine (5), the transition channel (17) stands in active flow connection with the tubular combustion chamber elements opening therein.

8. Gas turbine assembly according to claim 7, **characterised in that** the transition channel (17) to the turbine (5) has a cohesive annular through-flow cross-section.

9. Gas turbine assembly according to one or more of claims 1 to 8, **characterised in that** the rotating parts of the compressor (2) and turbine (5) are arranged on a common rotor (12).

10. Gas turbine assembly according to one or more of claims 1 to 9, **characterised in that** the gas turbine assembly is a component of a combined gas/steam power plant.

11. Method for operating a gas turbine assembly which substantially consists of
at least one compressor,
at least one first burner (8, 201),
at least one second burner (9, 202) connected downstream of the first burner,
at least one turbine (5) connected downstream of the second burner,
wherein at least the first and/or second burner (8, 9) constitute a component, formed in the flow direction of the combustion path formed by said burners, of at least one combustion chamber element (100, 200, 300) extending between the compressor (2) and the turbine (5) and closed in itself,
wherein the combustion chamber element has a tubular or form-changing cross-section, and
wherein the combustion chamber element is operated by sequential combustion, and
wherein the combustion path has a first reaction zone (3) arranged on the downstream side of the first burner (8), and the combustion path has a second reaction zone arranged on the downstream side of the second burner (9),
wherein part of the compressor air and/or a steam quantity and/or another gas is introduced into a connecting channel (11) arranged on the downstream side of the first reaction zone (3) and upstream of the second burner (9),
**characterised in that** a plurality of combustion chamber elements is arranged in a ring shape around a rotor (12) of the gas turbine assembly, and
that the combustion gases from a first combustion are cooled in an intermediate connecting channel (11) formed as a heat exchanger downstream of a reaction zone (3) belonging to the first burner (8) and upstream of the second burner (9).

12. Method according to claim 11, **characterised in that** the calorific potential of the exhaust gases from the gas turbine assembly is used to operate a steam circuit.

13. Method according to claim 11 or 12, **characterised in that** the gas turbine assembly is operated with a number of tubular combustion chamber elements which are arranged around the rotor and, during operation, develop between them an autonomous, quasi-autonomous or communicating combustion.

14. Method according to claim 11, **characterised in that** the combustion gases from a first combustion are cooled by means of a heat exchanger in an intermediate connecting channel (11) downstream of a reaction zone (3) belonging to the first burner (8) and upstream of the second burner (9).

15. Method according to one of claims 11 or 14, **characterised in that** an inert fluid, in particular water, water vapour, fresh air, bypass air, cooling air, is used to cool the combustion gases.

16. Method according to any of claims 11 to 15, **characterised in that** a first fuel is supplied to the first burner (8), a second fuel is supplied to the second burner (9), and the second fuel is injected directly into the combustion gases from the first combustion.

17. Method according to any of claims 11 to 16, **characterised in that** the fuel for the first and/or second burners is formed by a lean mixture.

18. Method according to any of claims 11 to 17, **characterised in that** a further fuel is injected into the intermediate connecting channel (11).

19. Method according to claim 18, **characterised in that** a lean mixture and/or a highly reactive gas is used as the fuel.

## Revendications

1. Turbogroupe à gaz, constitué globalement d'au moins un compresseur, d'au moins un premier brûleur (8, 201), d'au moins un deuxième brûleur (9, 202) disposé en aval du premier brûleur, d'au moins une turbine (5) disposée en aval du deuxième brûleur, d'au moins un rotor, au moins le premier et/ou le deuxième brûleur (8, 9), dans la direction d'écoulement d'un trajet de combustion formé par les brûleurs, faisant partie intégrante d'au moins un élément de chambre de combustion (100, 200, 300) s'étendant entre au moins un deuxième compresseur (2) et une turbine (5) et étant refermé sur lui-même, l'élément de chambre de combustion présentant une section transversale tubulaire ou de forme variable et le trajet de combustion comprenant une première zone de réaction (3), qui est disposée côté sortie du premier brûleur (8), le trajet de combustion comprenant une deuxième zone de réaction (4), qui est disposée côté sortie du deuxième brûleur (9), un canal de transition (11) étant disposé côté sortie de la première zone de réaction (3) et en amont du deuxième brûleur (9), et, dans le canal de transition, une partie de l'air du compresseur et/ou une quantité de vapeur et/ou un autre gaz peut être introduite,
**caractérisé en ce qu'**une pluralité d'éléments de chambre de combustion sont disposés de manière annulaire autour du rotor du turbogroupe à gaz et **en ce que** le canal de transition est conçu comme un échangeur thermique.

2. Turbogroupe à gaz selon la revendication 1, **caractérisé en ce qu'**au moins deux éléments de chambre de combustion comprennent, dans la direction d'écoulement, de leur trajet de combustion, au moins une zone de traversée intermédiaire de communication.

3. Turbogroupe à gaz selon l'une des revendications 1 à 2, **caractérisé en ce que** les éléments de chambre de combustion comprennent, au moins dans leur extension d'écoulement, au moins une zone de traversée annulaire commune.

4. Turbogroupe à gaz selon la revendication 1, **caractérisé en ce que** le canal de transition (11) est conçu comme un diffuseur.

5. Turbogroupe à gaz selon la revendication 1, **caractérisé en ce que** le premier brûleur (8) est un brûleur de pré-mélange.

6. Turbogroupe à gaz selon l'une des revendications 1 à 5, **caractérisé en ce que** les éléments de chambre de combustion convergent côté sortie de la deuxième zone de réaction (4) et en amont de la turbine (5) en un canal de transfert annulaire (17).

7. Turbogroupe à gaz selon la revendication 6, **caractérisé en ce que** le canal de transfert (17) est en liaison d'écoulement fonctionnelle, en amont de la turbine (5), avec les éléments de chambre de combustion tubulaires qui y débouchent.

8. Turbogroupe à gaz selon la revendication 7, **caractérisé en ce que** le canal de transfert (17) présente, vers la turbine (5), une section transversale d'écoulement annulaire.

9. Turbogroupe à gaz selon l'une des revendications 1 à 8, **caractérisé en ce que** les parties rotatives du compresseur (2) et de la turbine (5) sur un rotor (12) commun.

10. Turbogroupe à gaz selon l'une des revendications 1 à 9, **caractérisé en ce que** le turbogroupe à gaz fait partie intégrante d'une installation combinée gaz/vapeur.

11. Procédé d'exploitation d'un turbogroupe à gaz, qui est constitué globalement d'au moins un compresseur, d'au moins un premier brûleur (8, 201), d'au moins un deuxième brûleur (9, 202) disposé en aval du premier brûleur, d'au moins une turbine (5) disposée en aval du deuxième brûleur, d'au moins un rotor, au moins le premier et/ou le deuxième brûleur (8, 9), dans la direction d'écoulement d'un trajet de combustion formé par les brûleurs, faisant partie intégrante d'au moins un élément de chambre de combustion (100, 200, 300) s'étendant entre au moins un deuxième compresseur (2) et une turbine (5) et étant refermé sur lui-même, l'élément de chambre de combustion présentant une section transversale tubulaire ou de forme variable, et l'élément de chambre de combustion étant exploité par une combustion séquentielle et le trajet de combustion comprenant une première zone de réaction (3), qui est disposée côté sortie du premier brûleur (8), le trajet de combustion comprenant une deuxième zone de réaction (4), qui est disposée côté sortie du deuxième brûleur (9), un canal de transition (11) étant disposé côté sortie de la première zone de réaction (3) et dans le canal de transfert (11) disposé en amont du deuxième brûleur (9), une partie de l'air du compresseur et/ou une quantité de vapeur et/ou un autre gaz peut être introduite,
**caractérisé en ce qu'**une pluralité d'éléments de chambre de combustion sont disposés de manière annulaire autour d'un rotor (12) du turbogroupe à gaz et **en ce que** les gaz de combustion sont refroidis dans un canal de transition (11) intermédiaire conçu comme un échangeur thermique en aval d'une zone de réaction (3) appartenant au premier brûleur (8) et en amont du deuxième brûleur (9).

12. Procédé selon la revendication 11, **caractérisé en ce que** le potentiel calorique des gaz d'échappement du turbogroupe à gaz est utilisé pour l'exploitation d'un circuit de vapeur.

13. Procédé selon la revendication 11 ou 12, **caractérisé en ce que** le turbogroupe à gaz est exploité avec une pluralité d'éléments de chambre de combustion tubulaires qui sont disposés autour du rotor et qui développent entre eux pendant le fonctionnement une combustion autonome, quasi-autonome ou communicante.

14. Procédé selon la revendication 11, **caractérisé en ce que** les gaz de combustion provenant d'une première combustion sont refroidis dans un canal de transition intermédiaire (11) en aval d'une zone de réaction (3) appartenant à un premier brûleur (8) et en amont du deuxième brûleur (9) au moyen d'un échangeur thermique.

15. Procédé selon l'une des revendications 11 ou 14, **caractérisé en ce que**, pour le refroidissement des gaz de combustion, un fluide inerte, plus particulièrement de l'eau, de la vapeur d'eau, de l'air frais, de l'air de dérivation, de l'air de refroidissement, est utilisé.

16. Procédé selon l'une des revendications 11 à 15, **caractérisé en ce qu'**un premier combustible est introduit dans le premier brûleur (8), **en ce qu'**un deuxième combustible est introduit dans le deuxième brûleur (9), **en ce que** le deuxième combustible est injecté directement dans les gaz de combustion provenant de la première combustion.

17. Procédé selon l'une des revendications 11 à 16, **caractérisé en ce que** le combustible pour le premier et/ou le deuxième brûleur est constitué d'un mélange pauvre.

18. Procédé selon l'une des revendications 11 à 17, **caractérisé en ce que**, dans le canal de transition intermédiaire (11), un autre combustible est injecté.

19. Procédé selon la revendication 18, **caractérisé en ce que** le combustible utilisé est un mélange pauvre et/ou un gaz hautement réactif.
